# EUROPEAN PATENT APPLICATION

(11) **EP 1 496 672 A1**
(43) Date of publication of application: **12.01.2005**
(21) Application number: 03723117.2
(22) Date of filing: 15.04.2003
(51) Int. Cl.: H04M 1/02

(54) **PORTABLE TERMINAL**

(30) Priority: 16.04.2002 JP 2002113386
(71) Applicant: MATSUSHITA ELECTRIC INDUSTRIAL CO., LTD., Kadoma-shi, Osaka 571-8501 (JP)
(72) Inventor: SATOH, Noriyoshi, Yokohama-shi, Kanagawa 223-0056 (JP); YAMAGUCHI, Seiya, Yokohama-shi, Kanagawa 222-0001 (JP); TANAKA, Yasuyuki, Yokohama-shi, Kanagawa 224-0054 (JP)
(74) Representative: Grünecker, Kinkeldey, Stockmair & Schwanhäusser Anwaltssozietät
(86) International application number: PCT/JP2003/004781
(87) International publication number: WO 2003/088631

(57) **Abstract**

An object of the invention is to provide a portable telephone which is easily detachable an information recording medium while avoiding the enlargement of its size.

The portable telephone according to the invention includes a battery attachment portion (101c) of a concave shape to which a battery (107) is attached, a step portion (101d) protruded in the drawing-out direction (opposite direction to an arrow D in the figure) of the battery (107) with respect to the bottom surface of the battery attachment portion (101c), a UIM card connector (115) which is disposed near the surface extending across the corners of the step portion 101d and has a configuration that the one major surface of a UIM card (122) exposes on the surface of the step portion (101d) at the time of attaching the UIM card (122), and a battery cover (107a) which covers the step portion (101d) and the battery attachment portion (101c) at the time of attaching the battery (107).

## Description

### <Technical Field>

The present invention relates to a portable terminal capable of attaching an information recording medium thereto.

### <Background Art>

In recent years, devices accorded to the W-CDMA system employed in the third generation portable telephones have been developed and commercialized. A portable telephone accorded to the W-CDMA system is arranged so that an IC card (subscriber identification information card) such as a SIM (Subscriber Identity Module) card or a UIM (User Identity Module) card in which information (telephone number, ID and charging information etc. of a subscriber) is recorded can be attached to the telephone. By using the information recorded in the IC card, a portable phone can be used always in the same circumstance without depending on the hardwares different at every kinds of portable phones.

As a conventional portable phone to which the subscriber identification information card can be attached, there is a portable phone disclosed in JP-A-10-336292.

Fig. 11 is a rear vies of a conventional portable phone.

As shown in the figure, a portable telephone 200 has a battery attachment portion 203 of a concave shape. The battery attachment portion 203 is configured by a bottom surface 204 and a vertical wall 205 erected vertically from the bottom surface 204. An opening 206 which is protruded with respect to the bottom surface 204 is formed at the lower end side of the vertical wall 205. A card holder to which the subscriber identification information card is attached is inserted into the opening 206. The opening 206 is provided with finger insertion recess portions 208a and 208b at the both ends of the front panel portion 207 of the card holder, respectively, which is disposed at the center of the opening. When a user of the portable telephone 200 inserts the thumb 209a into the finger insertion recess portion 208a and inserts the forefinger 209b into the finger insertion recess portion 208b thereby to fasten and draw out the front panel portion 207 by both the fingers, the subscriber identification information card can be drawn out.

However, in the conventional portable telephone, the subscriber identification information card can not be drawn out without inserting the fingers near the bottom surface 204 of the battery attachment portion 203. Thus, for a person having large hands or a woman having long nails etc., the fingers can hardly be inserted into the finger insertion recess portions 208a and 208b, so that the subscriber identification information card can not be drawn out easily. In order for any person to draw out the subscriber identification information card easily, the finger insertion recess portions 208a and 208b are required to be made larger in their sizes and so there arises a problem that the portable telephone 200 is inevitably made large in its size.

Further, in recent years, a digital video camera and a notebook computer etc. to each of which a information recording card such as a MMC (Multi Media Card: trade mark) or a SD (Super Density: trade mark) card capable of recording audio information, image information and character information etc. therein can be attached have been commercialized. Thus, hereinafter, the third generation portable telephone has been desired to have the structure capable of also being attached with these information recording cards.

The invention has been made in view of the aforesaid problem of the conventional technique and an object of the invention is to provide a portable telephone which is easily detachable an information recording medium while avoiding the enlargement of its size, and also to provide a portable telephone which can house two information recording mediums therein while avoiding the enlargement of its size.

### <Disclosure of the invention>

The portable terminal according to the invention is arranged to include:
a battery attachment portion to which a detachable battery is attached;
an information recording medium storage portion for storing in a detachable manner an information recording medium in which information is recorded; and
a battery housing portion, for storing the battery, which is constituted by the battery attachment portion and the information recording medium storage portion, wherein
the information recording medium storage portion is disposed in a state of exposing one major surface of the information recording medium.

According to the invention, since the information recording medium storage portion is disposed in the state of exposing the one major surface of the information recording medium, the information recording medium can be drawn and inserted by touching the one surface of the information recording medium with fingers. Thus, the information recording medium can be easily attached and detached. Further, since the information recording medium storage portion is provided at the battery housing portion, the information recording medium storage portion can be disposed using the existing space. Therefore, it is not necessary to secure a new space for disposing the information recording medium storage portion, at a portion other than the battery housing portion. Accordingly, the enlargement of the portable terminal can be prevented.

Further, the battery housing portion is provided in a housing of an almost rectangular parallelepiped, and a second information recording medium storage portion, for storing in a detachable manner an information recording medium in which information is recorded, is disposed in adjacent to the battery housing portion along a longitudinal direction of the housing within the housing.

According to the invention, since the second information recording medium storage portion and the battery housing portion are disposed in adjacent to each other along the longitudinal direction of the housing, it is possible to house two kinds of the information recording mediums within the housing. Thus, the enlargement of the portable terminal capable of housing the two kinds of the information recording mediums can be prevented.

Further, the portable terminal is arranged to further include the housing, a second housing, and a hinge portion for coupling the housing and the second housing in a manner of capable of being folded.

According to the invention, since the second information recording medium storage portion and the battery housing portion are disposed in one of the housings, it is possible to house the two kinds of the information recording mediums within the one housing in the portable terminal arranged to be able to fold the two housings.

Further, each of the information recording medium and the second information recording medium has an almost rectangular parallelepiped shape,
the information recording medium storage portion is disposed in a manner that a longitudinal direction of the information recording medium coincides with a direction orthogonal to the longitudinal direction of the housing, and
the second information recording medium storage portion is disposed in a manner that a longitudinal direction of the second information recording medium coincides with the longitudinal direction of the housing.

According to the invention, since the information recording medium storage portion is disposed in a manner that the longitudinal direction of the information recording medium coincides with the direction orthogonal to the longitudinal direction of the housing, it is not necessary to make the longitudinal direction of the housing longer. Further, since the second information recording medium storage portion is disposed in a manner that the longitudinal direction of the second information recording medium coincides with the longitudinal direction of the housing, it is not necessary to make the direction orthogonal to the longitudinal direction of the housing longer. Thus, the enlargement of the housing capable of housing the information recording medium and the second information recording medium can be prevented.

Further, the housing has an opening portion for storing the second information recording medium within the second information recording medium storage portion, and
the opening portion is covered by an open/close lid in a manner that the lid moves in a direction orthogonal to a housing direction of the second information recording medium and rotates in a freely closing and opening manner with respect to the housing.

According to the invention, since the open/close lid is constituted in a manner that the lid moves in the direction orthogonal to the housing direction of the second information recording medium and rotates in a freely closing and opening manner with respect to the housing, the open/close lid is not opened even when a shock is applied to the housing and so the second information recording medium collides with the open/close lid. Thus, the second information recording medium can be prevented from being ejected outside.

Further, the information recording medium storage portion and an input/output portion for inputting and outputting information are disposed in an overlapped manner at a side of the information recording medium opposite to a surface of the information recording medium being exposed.

According to the invention, since the information recording medium storage portion and the input/output portion are disposed in the overlapped manner, the space for providing the information recording medium storage portion and the input/output portion can be reduced, so that the enlargement of the portable terminal can be prevented. Further, even when a force is applied to the information recording medium storage portion, the influence on the input/output portion can be reduced.

### <Brief Description of the Drawings>

Figs. 1(a) to 1(c) are a perspective view showing a closed state of the portable telephone according to the embodiment of the invention, a perspective view showing an opened state, and a perspective view of the opened state seen from the rear surface side.
Fig. 2 is a plan view of the portable telephone according to the embodiment.
Fig. 3 is a cross sectional view of the portable telephone shown in Fig. 2.
Fig. 4 is a perspective view of the housing member which is housed within the portable telephone according to the embodiment.
Fig.5 is a perspective view showing the rear surface side of the open/close cover 141.
Fig. 6 is a block diagram showing the inner structure of the portable telephone according to the embodiment.
Fig. 7 is an exploded perspective view of the lower housing 101a of the portable telephone according to the embodiment.
Figs. 8(a) to (d) are sectional diagrams showing the open/close lid 125 of the portable telephone according to the embodiment.

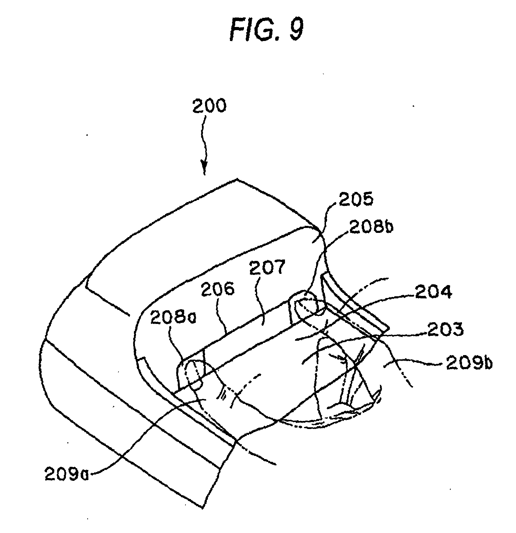

Fig. 9 is a rear view of a conventional portable telephone.

Incidentally, in the figures, a reference numeral 101 refers to a housing, 101a to a lower housing, 101b to an upper housing, 101c to a battery attachment portion, 101d and 101e to step portions, 102 to an antenna, 103 to a transceiver portion, 104 to a vibrator portion, 105 to an operation portion, 106 to an information recording portion, 107 to a battery, 108 a to receiver portion, 109 a to transmission portion, 110 to a camera portion, 111 to a hall element, 112 and 113 to display portions, 114 to an I/O connector, 115 to an UIM card connector, 116 to a SD card connector, 117 and 118 to print circuit boards, 119 to a control portion, 120 to a permanent magnet, 121 to an I/O plug, 122 to an UIM card, 123 to a SD card, 124 to a hinge portion, 125 an open/close lid, 126 a holder, 127 a contact terminal, 128 to a housing portion, 129 to a cover portion, 130a and 130b to connection lands, 131 to a signal terminal, 132 to a housing, 133 to a terminal, 134 to an opening portion, 135 to a housing portion, 136 to a holder, 137 and 138 to bearing shafts, 139a, 139b and 140 to coupling plates, 141 to an open/close cover, 142 and 143 to torsion coil spring, 144 to an elongated hole, 145 to a flange, 146 to an engagement nail, 147 to an engagement projection, 148 a projection portion, 149 a spring groove, 150 to a fixing hole, 151 to a hook hole, 152 to a rectangular hole, 153 to a projection portion, 200 to portable telephone, 203 to a battery attachment portion, 204to a bottom surface, 205 to a vertical wall, 206 to an opening, 207 to a front surface panel portion, 208a and 208b to finger insertion recess portion, 209a to a thumb, and 209b to a forefinger.

### <Best Mode for Carrying Out the Invention>

Hereinafter, an embodiment of the invention will be explained with reference to the drawings. The embodiment will be explained as to a portable telephone as an example of a portable terminal such as a portable information terminal or a portable telephone.

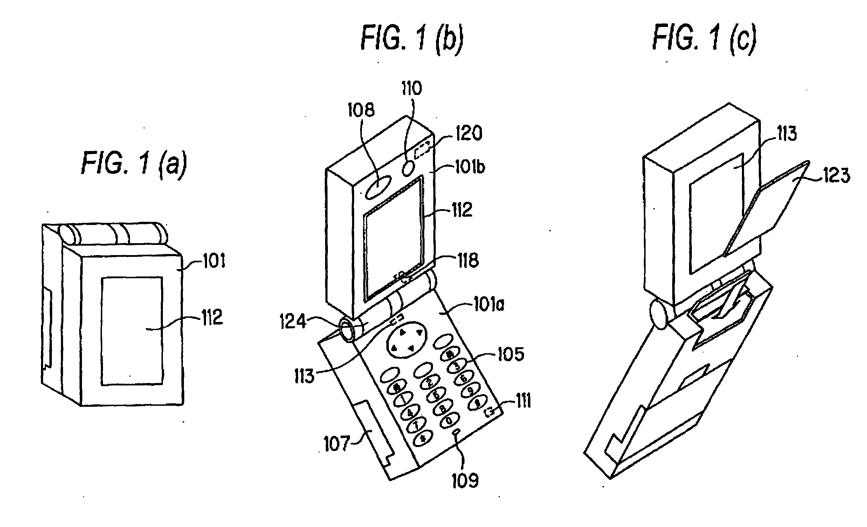

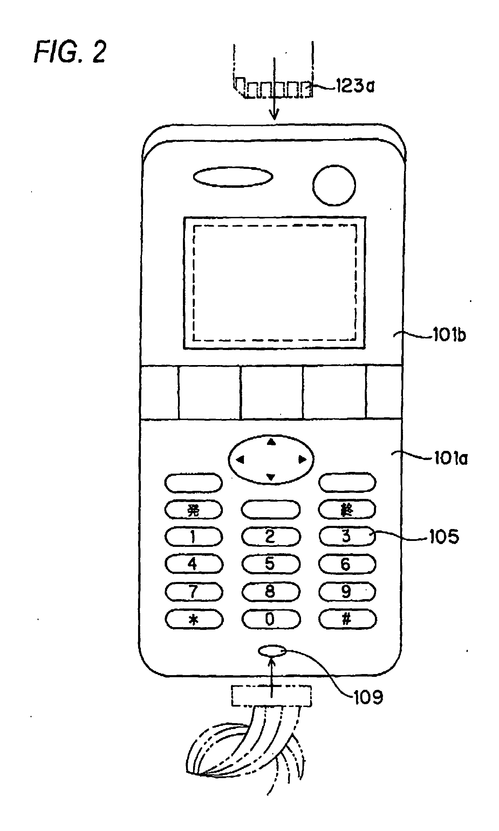

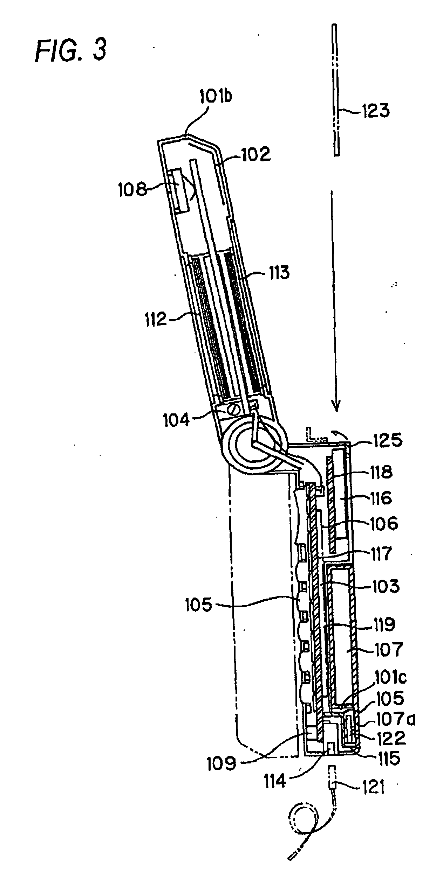

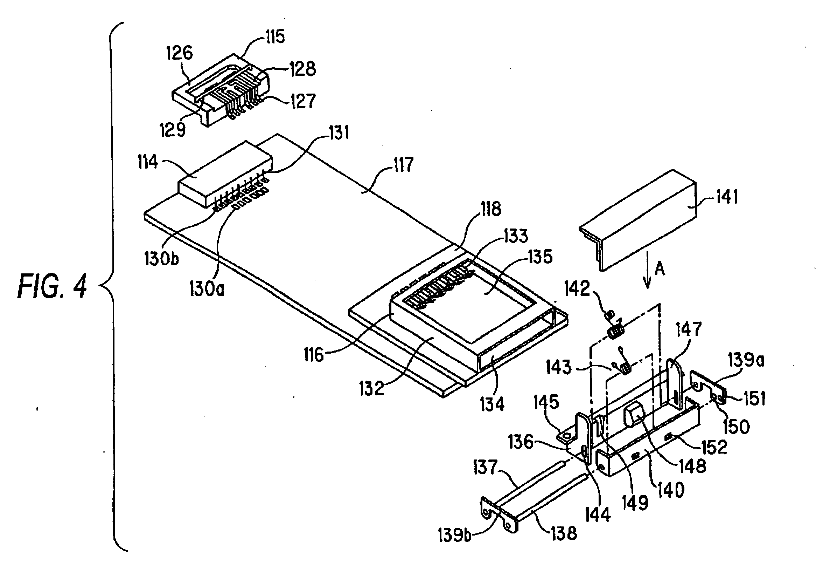

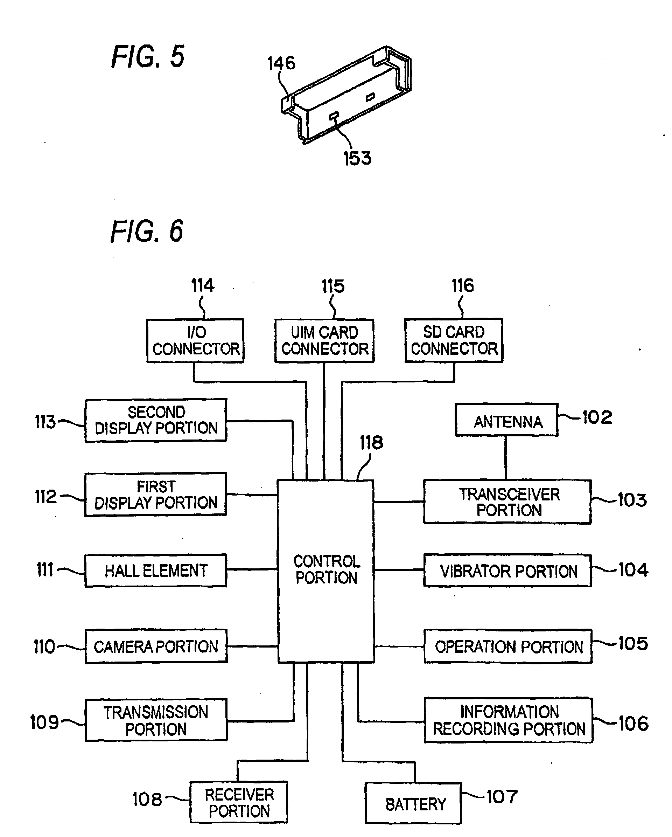

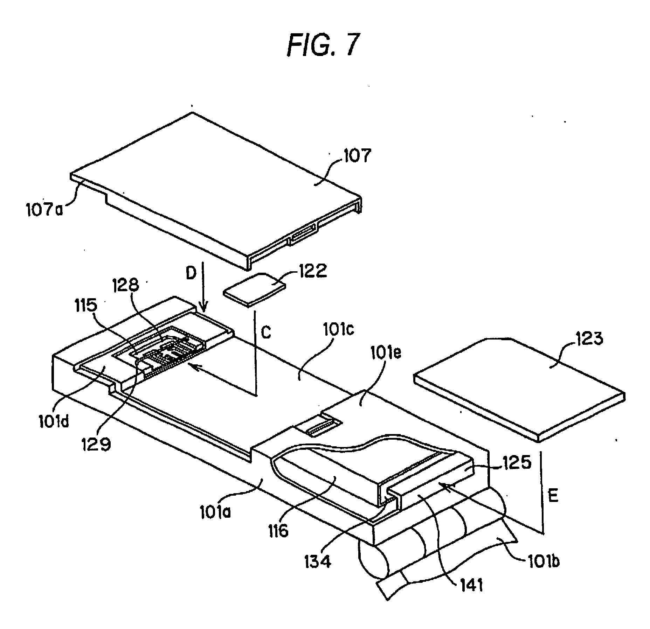

Fig. 1(a) is a perspective view showing a closed state of the portable telephone according to the embodiment of the invention. Fig. 1(b) is a perspective view showing an opened state of the portable telephone according to the embodiment of the invention.. Fig. 1(c) is a perspective view of the portable telephone seen from the rear surface side in Fig. 1(b). Fig. 2 is a plan view of the portable telephone according to the embodiment of the invention. Fig. 3 is a cross sectional view of the portable telephone shown in Fig. 2. Fig. 4 is a perspective view of the housing member which is housed within the portable telephone according to the embodiment of the invention. Fig.5 is a perspective view showing the rear surface side of the open/close cover 141. Fig. 6 is a block diagram showing the inner structure of the portable telephone according to the embodiment of the invention. Fig. 7 is an exploded perspective view of the lower housing of the portable telephone according to the embodiment of the invention. Hereinafter, the embodiment according to the invention will be explained as a case where a UIM card of an almost rectangular parallelepiped is used as the subscriber identification information card and a SD card of an almost rectangular parallelepiped is used as the information recording card.

In the portable telephone 100, the housing 101 is constituted by the lower housing 101a and the upper housing 101b, and the lower housing 101a and the upper housing 101b are coupled to be rotatable through the hinge portion 124. The portable telephone 100 is used in a closed state (folded state) where the lower housing 101a is adjacent and opposed to the upper housing 101b when being carried.

The upper housing 101b is provided with the antenna 102, the transceiver portion 103, the vibrator portion 104, the receiver portion (receiver) 108, the camera portion 110, the hall element 111, the display portion 112 and the display portion 113.

The lower housing 101a is provided with the operation portion 105, the information receiving portion 106, the detachable battery 107, the transmission portion (microphone) 109, the I/O connector 114, the UIM card connector 115 corresponding to an information recording medium storage portion recited in claims, the SD card connector 116 corresponding to a second information recording medium storage portion recited in claims, the printed circuit board 117, the printed circuit board 118 and the control portion 119. The housing 101 is adapted to be attached from the outside with the I/O plug 121, the UIM card 122 corresponding to an information recording medium recited in claims, and the SD card 123 corresponding to a second information recording medium recited in claims.

As shown in Fig. 6, the transceiver portion 103 is connected to the antenna 102. The portion 118 is connected to the transceiver portion 103, the vibrator portion 104, the operation portion 105, the information receiving portion 106, the battery 107 corresponding to a battery recited in claims, the receiver portion 108, the transmission portion 109, the camera portion 110, the hall element 111, the display portion 112, the display portion 113, the I/O connector 114, the UIM card connector 115, and the SD card connector 116 and controls these constituent elements. The portion 118 is connected to the battery 107 and supplied with electric power therefrom.

The antenna 102 receives a radio signal and transmits the received signal to the transceiver portion 103. The transceiver portion 103 processes the received signal from the antenna 102 and transmits the received signal thus processed to the receiver portion 108. The receiver portion 108 outputs sound or voice in response to the received signal from the transceiver portion 103. The transmission portion 109 receives voice, then converts the voice into a transmission signal and transmits the transmission signal to the antenna 102. The antenna 102 receives the transmission signal from the transceiver portion 103 and transmits as a radio signal.

On the printed circuit board 117, the transceiver portion 103, the operation portion 105 and the information receiving portion 106 are formed and the I/O connector 114 is mounted. The SD card connector 116 is mounted on the printed circuit board 118.

The vibrator portion 104 is used to vibrate and notify an incoming call through vibration. The operation portion 105 is used to input characters, symbols, numerals and operation signals etc. and to operate the camera portion 110. The information receiving portion 106 is arranged to record therein telephone number information, voice information, non-voice information and image information etc.

Each of the display portion 112 and the display portion 113 is configured by a liquid crystal display and displays characters, symbols, numerals and images etc. thereon. The display portion 112 is provided at the surface of the lower housing 101a which is exposed when the upper housing 101b is opened. The display portion 113 is provided at the surface in opposite to the surface where the display portion 112 is provided. The camera portion 110 is provided at the same surface of the upper housing 101b where the display portion 112 is provided and disposed so as to photograph the forward portion of the display portion 112.

The permanent magnet 120 is provided at the same surface where the display portion 112 of the upper housing 101b is provided. The hall element 111 is provided at the surface of the upper housing 101b which opposes to the surface of the lower housing 101a when the lower housing 101a and the upper housing 101b are closed. When the lower housing 101a and the upper housing 101b are closed, the permanent magnet 120 approaches the hall element 111, which in turn detects the permanent magnet 120 and transmits a detection signal to the control portion 119.

When the lower housing 101a and the upper housing 101b are opened (shown in Figs. 2 and 3), the permanent magnet 120 is separated from the hall element 111, so that the hall element 111 can not detect the permanent magnet 120 and so the detection signal is not generated.

The portion 118 can recognize the open/close state of the lower housing 101a and the upper housing 101b in accordance with the non-presence and the presence of the detection signal from the hall element 111, respectively.

The I/O plug (a contact plug for a radio signal system and an audio or image signal system) 121 is a plug for inputting and outputting data from and to an external device and is attached to the I/O connector (an interface connector) 114 from the outside of the housing 101. The UIM card 122 is attached to the UIM card connector 115 from the outside of the housing 101. The UIM card connector 115 is covered by a battery cover 117a which is attached to the battery 107.

The battery attachment portion 101c is a portion to which the battery 107 is attached and has a concave shape with respect to the lower housing 101a. The step portions 101d and 101e are portions protruded in the attachment direction of the battery 107 with respect to the bottom surface of the battery attachment portion 101c. Incidentally, the portions (the battery attachment portion 101c and the step portion 101d) covered by the battery cover 117a when the battery 107 is attached to the lower housing 101a corresponds to a battery housing portion recited in claims. The SD card 123 is attached to the SD card connector 116 from the outside of the housing 101. The opening portion 134 of the SD card connector 116 is arranged to be covered by the open/close lid 125 which can be opened and closed with respect to the lower housing 101a.

The UIM card connector 115 is provided with the holder 126 and the contact terminal 127. An IC contained in the UIM card 122 records therein information such as telephone numbers, a user ID and charges for calls. The UIM card 122 has a size of 12mm in width, 25mm in length and 0.76mm in thickness. The holder 126 is formed in a reverse-L shape and provided with the housing portion 128 in which the UIM card 122 is housed and the cover portion 129 for preventing the UIM card 122 thus inserted from separating from the housing portion 128. The UIM card 122 is inserted between the housing portion 128 and the cover portion 129 from the battery attachment portion 101c side and attached to the UIM card connector.

The UIM card connector 115 is disposed near the external appearance surface extending across the corner portions of the step portion 101d protruded in the attachment direction of the battery 107 with respect to the bottom surface of the battery attachment portion 101c in a manner that the longitudinal direction of the UIM card 122 to be attached coincides with the direction orthogonal to the longitudinal direction of the lower housing 101a.

Six contact terminals 127 are provided in correspondence to Vcc, Vdd, GND, RST, CLK and I/O, respectively. The one end of each of these contact terminals 127 abuts against the contact portion (not shown) of the UIM card 122 thus attached, whilst the other end thereof abuts against the connection land 130a on the printed circuit board 117 contained within the lower housing 101a thereby to electrically connect the UIM card 122 to the printed circuit board 117.

The I/O connector 114 of an almost box shape is disposed so as to be overlapped with the UIM card connector 115 and surface-mounted near the end surface of the printed circuit board 117. The signal terminals 131 of the I/O connector 114 are connected through the soldering to the connection lands 130b which are formed near the connection lands 130a and on the end surface side of the printed circuit board 117.

Explanation will be made as to the inspection method in an assembling factory.

In general, whether an electronic part surface-mounted on a printed circuit board is normally soldered or not is determined through inspecting the presence or non-presence of a fillet by means of a dedicated robot. In order to facilitate this inspection and also to facilitate the repair using a soldering iron (to secure a space for inserting the soldering iron) when the inspection result is determined to be failure, a space for a part of a predetermined length or more is required between the connection land 130a and the connection land 130b.

According to the embodiment, in order to miniaturize the portable telephone by closely disposing parts (narrowing the space between the connection land 130a and the connection land 130b) each having a large height and many terminals to be soldered, the terminals of the parts on one side (the signal terminals 131 of the I/O connector 114) are automatically mounted and the terminals of the parts on the other side (the contact terminals 127 of the UIM card connector 115) are formed as spring contacts. Thus, the parts on the one side are automatically inspected by the robot and the sufficient space for inserting the soldering iron for the repair therein is secured when the inspection result is determined to be failure. On the other hand, when the inspection result is determined to be normal, the parts on the other side are merely placed on the printed circuit board, whereby both the parts on the one side and the parts on the other side are electrically connected. Alternatively, the parts on the other side may be assembled to the lower housing 101a in advance and the printed circuit board 117 may be housed within the lower housing 101a thereby to electrically connect the contact terminals 127 and the connection lands 130a.

Next, detailed explanation will be made as to the SD card connector 116 and the open/close lid 125.

The SD card connector 116 includes the housing 132 and the terminals 133. Image or audio or voice information can be recorded into an IC contained within the SD card 123. The SD card 123 has a size of 24mm in width, 32mm in height and 2.1 in thickness.

The housing 132 includes the opening portion 134 in which the SD card 123 is inserted and the housing portion 135 for storing the SD card 123 which is inserted through the opening portion 134. Nine terminals 133 are provided for card detection, command, ground, power source and data I/O. The one ends of the terminals 133 abut against the contact portions (123a of Fig. 2) of the SD card 123 and the other ends thereof are soldered and connected to the printed circuit board 118 contained within the lower housing 101a. The SD card connector 116 is disposed in a manner that the longitudinal direction of the SD card 123 to be attached coincides with the longitudinal direction of the lower housing 101a.

The card 116 is housed within the step portion 101e which is protruded in the attachment direction of the battery 107 with respect to the bottom surface of the battery attachment portion 101c. The opening portion 134 is covered by the open/close lid 125. The open/close lid 125 includes the holder 136, the bearing shaft 137, the bearing shaft 138, the coupling plates 139, the coupling plate 140, the open/close cover 141, the torsion coil spring 142 and the torsion coil spring 143.

A pair of the coupling plates 139a and 139b couple the both ends of each of the bearing shafts 137 and 138. The coupling plate 140 is rotatably supported by the bearing shaft 138. The open/close cover 141 is attached to the coupling plate 140 and forms the external appearance surfaces together with the lower housing 101a. The bearing shaft 137 is passed through the torsion coil spring 142 thereby to apply a rotational torque around the shaft center of the bearing shaft 137 to the coupling plates 139 with respect to the holder 136. The one end of the torsion coil spring 143 is hooked on the coupling plate 139 and the other end thereof is provided so as to lean against the bent root of the coupling plate 140 thereby to apply a rotational torque around the shaft center of the bearing shaft 138 to the coupling plate 140 and the open/close cover 141 with respect to the coupling plates 139.

The holder 136 is provided at both ends thereof with the elongated holes 144 through which the bearing shaft 137 is passed and further provided at the outer side thereof with the flange 145 which is fastened to the lower housing 101a by means of screws (not shown). The engagement projections 147 engaging with the engagement nails 146 of the open/close cover 141 are provided at the both ends of the upper portion of the holder 136 in an erected manner, respectively.

Further, the holder 136 is provided at the center portion thereof with the projection portion 148 having a top portion which slightly bends the center portion of the bearing shaft 137 when the bearing shaft 137 is shifted in the longitudinal direction of the elongated holes 144, and further provided with the spring groove 149 which is disposed at the side of the projection portion 148 and in which the one end of the first torsion coil spring 142 is inserted to suppress the rotation of the one end. Each of the torsion coil springs 142 and 143 is attached so as to be twisted in a direction of increasing its winding number in a manner that the twisted angle thereof is 0 degree or more irrespective of the positions of the coupling plates 139a, 139b, the coupling plate 140 and the open/close cover 141.

Each of the coupling plates 139a and 139b is provided at the end portions thereof with the two fixing holes 150 in which the bearing shaft 137 and the bearing shaft 138 are fixed through the caulking, respectively. The coupling plate 139a is provided with the hook hole 151 in which the one end of the second torsion coil spring 143 is hooked. The other end of the torsion coil spring 142 is hooked on the outer peripheral portion of the coupling plate 139a.

The coupling plate 140 is provided at the center portions thereof with two rectangular holes 152 which engage with the two projections 143 (shown in Fig. 5) of the open/close cover 141, whereby the open/close cover 141 is attached to the coupling plate 140 when inserted along the direction shown by an arrow A. In the case of disengaging the open/close cover 141, the engagement between the rectangular holes 152 and the projections 153 are released and the open/close cover 141 is pulled in a direction opposite to the direction shown by the arrow A., whereby the open/close cover is separated from the coupling plate.

In an assembling factory, a unit (hereinafter referred to a rotation unit) formed by assembling in advance the holder 136, the bearing shaft 137, the bearing shaft 138, the coupling plates 139, the coupling plate 140, the torsion coil spring 142 and the torsion coil spring 143 is supplied, and this unit is assembled to the lower housing 101a. Then, various characteristics such as radio characteristics, receiving characteristics and transmission characteristics are inspected as to each of the units thus assembled, and the open/close cover 141 is assembled only to each of the units having passed the inspection. In this manner, since the confirmation of the rotating operation of the rotation unit can be performed in a different procedure from the inspection of the external appearance of the open/close cover 141, the productivity of the portable telephones 100 can be improved.

Next, the operation of the portable telephone according to the embodiment of the invention will be explained with reference to Figs. 1 to 8.

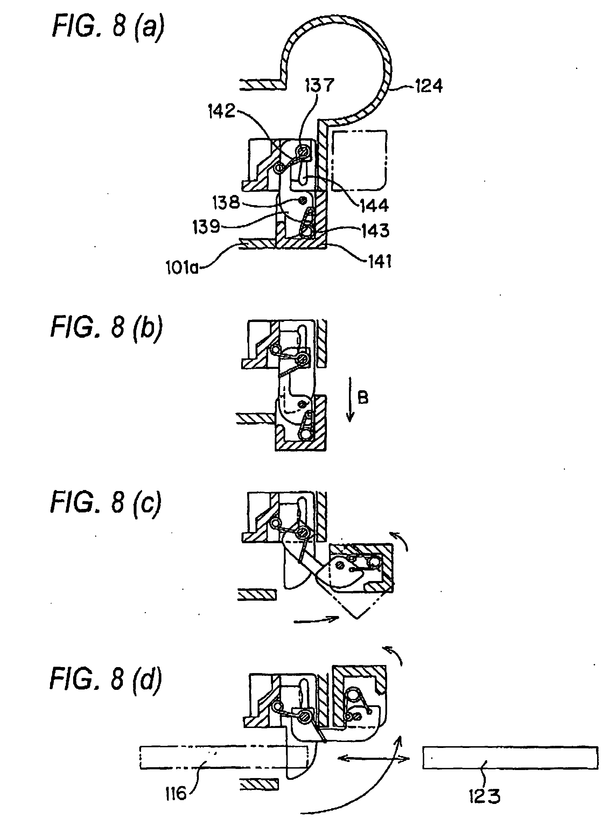

Fig. 8 is sectional diagrams showing the open/close lid of the portable telephone according to the embodiment of the invention, wherein Fig 8(a) shows a state where the open/close lid is at the first position, Fig. 8(b) shows a state where the open/close lid is at the second position, Fig. 8(c) shows a state where the open/close lid is at the third position, and Fig. 8(d) shows a state where the open/close lid is at the fourth position.

First, the operation of the open/close lid will be explained with reference to Fig. 8.

Fig. 8(a) shows the state where the open/close cover 141 of the open/close lid 125 covers the opening portion 134, in which the engagement nails 146 of the open/close cover 141 engage with the engagement projections 147 of the holder 136. The bearing shaft 137 locates at the one end sides of the elongated holes 144 (the upper side in Fig. 8(a) but the lower side in Fig. 4) and so the lower housing 101a coincides with the open/close cover 141 in their external appearance surfaces. This state is referred as the first position (closed state).

When an external force is applied to the open/close cover 141 by a finger in a direction shown by an arrow B in the first position, the bearing shaft 137 passes the projection portion 148 accompanied with a clicking operation and moves to the other end sides of the elongated holes 144. Then, the engagement between the engagement nails 146 and the engagement projections 147 is released and so the lid etc. are placed in a state shown in Fig. 8(b). This state is referred as the second position of the open/close lid 125.

When the engagement between the engagement nails 146 and the engagement projections 147 is released, the holder 136 and the coupling plates 139a, 139b are applied with a force due to the torsion moment of the torsion coil spring 142, so that a torque is generated around the bearing shaft 137 thereby to start to rotate the coupling plate 139 together with the open/close cover 141 counterclockwise.

Further, since the coupling plates 139a, 139b and the open/close cover 141 are applied with a force due to the torsion moment of the torsion coil spring 143, a torque is generated around the bearing shaft 138 thereby to start to rotate the open/close cover 141 counterclockwise. This state is referred as the third position of the open/close lid 125 as shown in Fig. 8(c). Thereafter, the coupling plate 139a and the coupling plate 139b are rotated by about 90 degrees counterclockwise, and the open/close cover 141 is rotated by about 180 degrees counterclockwise. The state where these rotation operations are terminated is shown in Fig. 8(d) and this state is referred as the fourth position of the open/close lid 125.

As shown in Fig. 8(d), the open/close cover 141 is opened semi-automatically so that the external appearance surface of the open/close cover opposes to the external appearance surface of the lower housing 101a thereby to expose the opening portion 134 of the SD card connector 116, whereby the SD card 123 can attach to and detach from the SD card connector 116.

In Fig. 7, the UIM card 122 is attached to the UIM card connector 115 along the direction shown by an arrow C. Thereafter, when the battery 107 is assembled along the direction shown by an arrow D, the battery cover 107a of the battery 107 covers the UIM card 122. After opening the open/close cover 141, the SD card 123 is attached to the SD card connector 116 along the direction shown by an arrow E and the open/close cover 141 is closed, whereby the attachment procedure is completed.

As explained above, according to the embodiment, the open/close lid 125 is provided with the two rotation shafts and further provided with torsion coil springs for rotating the open/close cover in the same direction around the rotation shafts, respectively. Thus, when a user attaches or detaches the SD card 123, the user can open the opening portion 134 without damaging the open/close cover 141 by merely moving the open/close cover 141. Further, since the opening portion 134 is near the external appearance surface of the lower housing 101a, the SD card 123 having been attached also is positioned near the external appearance surface of the lower housing 101a in the state where the open/close lid 125 is opened. Thus, the attaching and detaching operations of the SD card 123 through the pushing and drawing operations thereof can be performed easily.

Further, since the open/close cover 141 is configured so as to rotate after being shifted in the direction orthogonal to the attaching/detaching direction of the SD card 123, there does not arise such a phenomenon that, if the portable telephone is dropped, for example, the housed SD card 123 collides with the open/close cover 141 to open the open/close lid 125 and so the SD card 123 is moved outside.

Incidentally, at the time of restoring (closing) the open/close lid 125 from the fourth position where the lid is opened to the first position, when a user applies a force to the open/close cover 141, the open/close cover 141 and the coupling plate 139 start to rotate clockwise. Then, the lid is shifted to the second position through the third position. Thereafter, when the user further applies a force continuously in the direction opposite to the direction shown by the arrow B, the lid moves to the first position through a clicking operation. In this manner, the operation for closing the open/close lid 125 is also very simple. Further, since the open/close lid 125 is closed accompanied with the clicking operation, the completion of the closing operation can be easily recognized advantageously.

If the portable telephone is configured in a manner that only the open/close cover 141 collides with the ground when the portable telephone 100 is dropped on the ground in a state that the open/close lid 125 is opened to a position near the hinge portion 124 (the fourth position of the open/close lid 125), the open/close cover 141 is broken. Thus, in this case, it is necessary to form the open/close lid 125 by metal material with high rigidity, for example.

In contrast, according to the embodiment, the portable telephone is configured in a manner that even when the portable telephone 100 is dropped in the opened state of the open/close lid 125, only the hinge portion 124 and the open/close cover 141 or only the hinge portion 124 collides with the ground. Thus, since a shock caused by the collision with the ground is distributed, it is not necessary to form the open/close cover 141 by material with high rigidity and high intensity. As a result, the cost-up of the portable telephones 100 at the time of production thereof can be avoided.

Incidentally, when the open/close cover 141 is required to be exchanged in such a case where the open/close cover 141 is broken or damaged due to an unexpected accident and a user wants to exchange this cover, the engagement between the open/close cover 141 and the coupling plate 140 is released and then the open/close cover 141 is drawn in the direction opposite to the direction shown by the arrow A, whereby the open/close cover and the coupling plate are separated. Then, a new open/close cover 141 is assembled along the direction shown by the arrow A, whereby the reassembling of the open/close lid 125 is completed. In this manner, since the portable telephone 100 can be promptly repaired at a repair shop etc. without returning the portable telephone to an assembling factory, the portable telephone can be maintained quite easily.

Further, according to the embodiment, since the coupling plates 139 rotate about 90 degrees, the torsion coil spring 142 is arranged to also twist about 90 degrees. On the other hand, since the torsion coil spring 143 is disposed in a manner that the coil center thereof does not coincide with the bearing shaft 138 (that is, disposed at the peripheral portion of the bearing shaft 138), the torsion angle thereof is smaller than the rotation angle of the open/close cover 141 (compare between Fig. 8(a) and Fig. 8(d)).

For example, when the coil center of the torsion coil spring 143 is made coincide (coaxially) with the bearing shaft 138, the torsion angle of the torsion spring becomes almost same as the rotation angle of the open/close cover 141, so that a stress generated at the spring may exceed an allowable stress depending on the average diameter and the number of the windings of the spring. Thus, a stress thus generated can be made small by arranging the constituent elements according to the embodiment. As a result, the cost-up of the portable telephones 100 at the time of production thereof can be avoided without selecting expensive material with a large allowable stress.

According to the aforesaid reason, the similar effect can be obtained when the torsion coil spring 142 is disposed in a manner that the coil center thereof does not coincide with the coil center of the bearing shaft 137 thereby to make the torsion angle of the torsion coil spring 142 small. Thus, suitable method may be employed depending on the structure.

Further, according to the embodiment, the housing portion 128 of the UIM card connector 115 is formed at the upper surface of the UIM card connector 115 (near the external appearance surface of the lower housing 101a). That is, the one major surface of the UIM card 122 attached to the UIM card connector 115 is exposed when the battery 107 is removed. Thus, even for a person having large hands or long nails etc., the person can easily attach and detach the UIM card 122 by touching the one major surface thereof with the fingers to insert and remove the card.

Further, according to the embodiment, since the direction orthogonal to the longitudinal direction of the lower housing 101a is made coincide with the longitudinal direction of the UIM card 122, it is not necessary to make the longitudinal direction of the lower housing 101a long. Further, since the longitudinal direction of the lower housing 101a is made coincide with the longitudinal direction of the SD card 123, it is not necessary to make the direction orthogonal to the longitudinal direction of the lower housing 101a long. Thus, the portable telephone 100 having the UIM card connector 115 and the SD card connector 116 and capable of easily detaching the UIM card 122 can be provided without increasing the size of the portable telephone 100.

It should be understood by those skilled in the art that although the foregoing description has been made on the particular embodiment, the invention is not limited thereto and various changes and modifications may be made without departing from the spirit and the scope of the invention.

The present application is based on Japanese Patent Application No. 2002-113386 filed on April 16, 2002, the content of which is incorporated herein by reference.

### <Industrial Applicability>

According to the invention, since the information recording medium storage portion is disposed in the state of exposing the one major surface of the information recording medium, the information recording medium can be drawn and inserted by touching the one surface of the information recording medium with fingers. Thus, the information recording medium can be easily attached and detached. Further, since the information recording medium storage portion is provided at the battery housing portion, the information recording medium storage portion can be disposed using the existing space. Therefore, it is not necessary to secure a new space for disposing the information recording medium storage portion, at a portion other than the battery housing portion. Accordingly, the enlargement of the portable terminal can be prevented.

## Claims

1. A portable terminal comprising:
a battery attachment portion to which a detachable battery is attached;
an information recording medium storage portion for storing in a detachable manner an information recording medium in which information is recorded; and
a battery housing portion, for storing the battery, which is constituted by the battery attachment portion and the information recording medium storage portion,
wherein the information recording medium storage portion is disposed in a state of exposing one major surface of the information recording medium.

2. The portable terminal according to claim 1,
wherein the battery housing portion is provided in a housing of an almost rectangular parallelepiped, and
wherein a second information recording medium storage portion, for storing in a detachable manner an information recording medium in which information is recorded, is disposed in adjacent to the battery housing portion along a longitudinal direction of the housing within the housing.

3. The portable terminal according to claim 2, further comprising:
the housing;
a second housing; and
a hinge portion for coupling the housing and the second housing in a manner of capable of being folded.

4. The portable terminal according to claim 2 or 3,
wherein each of the information recording medium and the second information recording medium has an almost rectangular parallelepiped shape,
wherein the information recording medium storage portion is disposed in a manner that a longitudinal direction of the information recording medium coincides with a direction orthogonal to the longitudinal direction of the housing, and
wherein the second information recording medium storage portion is disposed in a manner that a longitudinal direction of the second information recording medium coincides with the longitudinal direction of the housing.

5. The portable terminal according to one of claims 2 to 4,
wherein the housing has an opening portion for storing the second information recording medium within the second information recording medium storage portion, and
wherein the opening portion is covered by an open/close lid in a manner that the lid moves in a direction orthogonal to a housing direction of the second information recording medium and rotates in a freely closing and opening manner with respect to the housing.

6. The portable terminal according to one of claims 1 to 5,
wherein the information recording medium storage portion and an input/output portion for inputting and outputting information are disposed in an overlapped manner at a side of the information recording medium opposite to a surface of the information recording medium being exposed.
